# FASCICULE DE BREVET EUROPEEN

(11) **EP 1 573 182 B1**
(45) Date de publication et mention de la délivrance du brevet: **11.02.2009**
(21) Numéro de dépôt: 03796173.7
(22) Date de dépôt: 05.12.2003
(51) Int. Cl.: F01N 7/08, F01N 7/10, F16J 15/08, F16J 15/06

(54) **JOINT METALLIQUE DE CIRCUIT D'ECHAPEMENT A DEFLECTEUR INTEGRE ET MOTEUR INCLUANT UN TEL JOINT**
METALLDICHTUNG FÜR EINE ABGASANLAGE MITINTEGRIERTEM DEFLEKTOR UND SOLCH EINE DICHTUNG UMFASSENDER MOTOR
METALLIC GASKET FOR AN EXHAUST SYSTEM WITH INTEGRATED DEFLECTOR AND ENGINE COMPRISING ONE SUCH GASKET

(30) Priorité: 06.12.2002 FR 0215496
(43) Date de publication de la demande: 14.09.2005
(73) Titulaire: RENAULT S.A.S., 92100 Boulogne Billancourt (FR)
(72) Inventeur: DUMAS, Eric, F-78800 Houilles (FR); EVERARD, Frédéric, F-95330 Domont (FR)
(74) Mandataire: Rougemont, Bernard
(86) Numéro de dépôt international: PCT/FR2003/003602
(87) Numéro de publication internationale: WO 2004/053306

(56) Documents cités:
- EP-A- 0 482 899
- DE-A- 2 738 244
- US-A- 3 108 818
- US-A- 4 838 583
- US-A- 5 145 219
- US-A- 5 409 270
- US-A- 5 423 580
- US-A- 6 164 062
- US-B1- 6 260 853
- PATENT ABSTRACTS OF JAPAN vol. 010, no. 242 (M-509), 21 août 1986 (1986-08-21) & JP 61 072852 A (NISSAN MOTOR CO LTD), 14 avril 1986 (1986-04-14)

## Description

L'invention concerne les moteurs thermiques et en particulier les joints des circuits d'échappement de moteurs thermiques automobiles.

Les moteurs thermiques ont connu de récents développements ayant conduit à une complexité accrue des circuits d'échappement. Les circuits d'échappement incluent notamment de plus en plus fréquemment des circuits de recyclage de gaz d'échappement, aussi appelés EGR. Le nombre de pièces formant le circuit d'échappement d'un moteur thermique s'accroît ainsi. Le nombre d'interfaces entre ces pièces et par conséquent le nombre de joints d'étanchéité nécessaires s'accroît également.

Une fuite au niveau d'un joint du circuit d'échappement peut générer un jet de gaz brûlant à une température de l'ordre de 800°C, à une pression de l'ordre de 4 bars et sur une distance d'une dizaine de centimètres. Ces jets peuvent être à l'origine d'incendies du véhicule.

Le véhicule commercialisé sous la référence Tino YD22 par la société Nissan présente des boîtiers entourant des joints d'étanchéité. Les boîtiers forment un écran évitant la propagation d'éventuels jets de gaz brûlants.

De tels boîtiers présentent des inconvénients. Ces boîtiers sont coûteux, volumineux et complexifient l'assemblage du véhicule. Les documents US 6,260,853 et US6164062 divulguent des joints.

L'invention vise ainsi à résoudre un ou plusieurs de ces inconvénients.

L'invention a ainsi pour obj et un joint d'étanchéité pour circuit d'échappement de véhicule automobile, comprenant une surface plane de jointure formant une boucle fermée entourant une lumière; le joint comprenant en outre un déflecteur entourant la surface de jointure et faisant saillie de part et d'autre de la surface de jointure.

L'invention a également pour objet un circuit d'échappement automobile, comprenant deux éléments présentant des conduits respectifs dont les extrémités sont placées en vis-à-vis; un joint tel que décrit ci-dessus, dont la surface de jointure est comprimée entre lesdites extrémités des conduits, dont la lumière met en communication lesdits conduits et dont le déflecteur entoure lesdites extrémités des conduits.

L'invention sera mieux comprise et d'autres particularités et avantages apparaîtront à la lecture de la description qui va suivre, la description faisant référence aux dessins annexés parmi lesquels :
- la figure 1 représente une vue en coupe d'un exemple de joint selon l'invention;
- la figure 2 représente une vue de face du joint de la figure 1;
- la figure 3 représente une vue en perspective d'éléments d'un circuit d'échappement entre lesquels le joint des figures 1 et 2 est disposé;
- la figure 4 représente une vue en perspective d'un joint selon une variante de l'invention.

L'invention propose notamment un joint d'étanchéité pour circuit d'échappement de véhicule automobile présentant une surface de jointure entourée par un déflecteur.

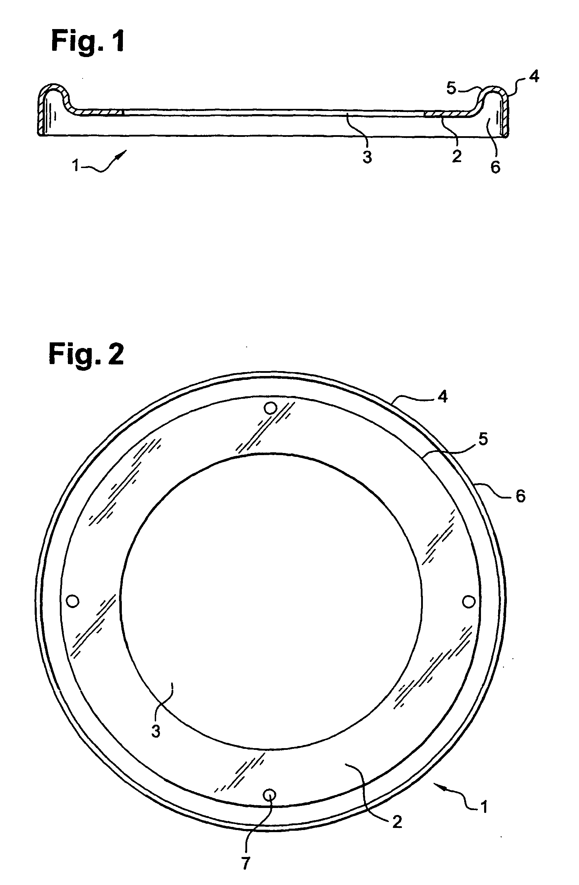

Les figures 1 et 2 représentent un exemple de joint d'étanchéité de circuit d'échappement selon l'invention.

Le joint 1 présente de façon connue en soi une surface plane de jointure 2 formant une boucle fermée autour d'une lumière 3. La surface de jointure 2 est destinée à être comprimée entre deux tubulures de gaz d'échappement devant être assemblées de façon étanche. La lumière réalisée au centre du joint est destinée à permettre l'écoulement de gaz d'échappement entre les tubulures. Le joint 1 présente par ailleurs un déflecteur 4. Le déflecteur 4 entoure la surface de jointure 2. Le déflecteur fait saillie de part et d'autre de la surface de jointure., suivant la normale à la surface de jointure. Ainsi, en cas de fuite de gaz au niveau de la surface de jointure, le jet de gaz est dévié et diffusé par le déflecteur 4. Le jet de gaz ne peut donc pas atteindre d'autres éléments et le risque de départ d'incendie est ainsi fortement réduit. La diffusion du jet permet également de réduire très fortement la température du jet en s'éloignant de l'origine de la fuite. Comme le déflecteur est saillant de part et d'autre de la surface de jointure, le déflecteur fonctionnera quel que soit le côté du joint où la fuite aura lieu. On obtient ainsi un système simple et peu coûteux, évitant les risques d'incendie, et qui peut aisément être monté en lieu et place de joints d'étanchéité classiques en modifiant un minimum le procédé d'assemblage d'un véhicule.

On prévoit des dimensions de saillie suivantes afin de dévier et diffuser un éventuel jet de gaz de façon optimale: On prévoit une saillie de part et d'autre de la surface de jointure supérieure à au moins deux fois l'épaisseur minimale de cette surface. On prévoit généralement une surface de jointure la plus plane possible. On prévoit de façon générale que la saillie soit supérieure à 2 millimètres. On prévoit également que le joint présente une épaisseur comprise entre 0,2 et 1,5 millimètres.

Le joint est de préférence constitué d'un alliage métallique. Il peut également être constitué en tout matériau adéquat pour assurer l'étanchéité dans un circuit de gaz d'échappement. Dans l'exemple représenté aux figures 1 et 2, le déflecteur 4 présente deux flancs 5 et 6 formant une rigole. Un tel déflecteur est assez aisé à fabriquer par un procédé d'estampage. Dans l'exemple représenté, la rigole présente une section en forme de U, qui est particulièrement adaptée à une fabrication par estampage.

Le joint représenté présente également des lumières 7 supplémentaires destinées à laisser passer des vis de fixation des éléments à étanchéifier.

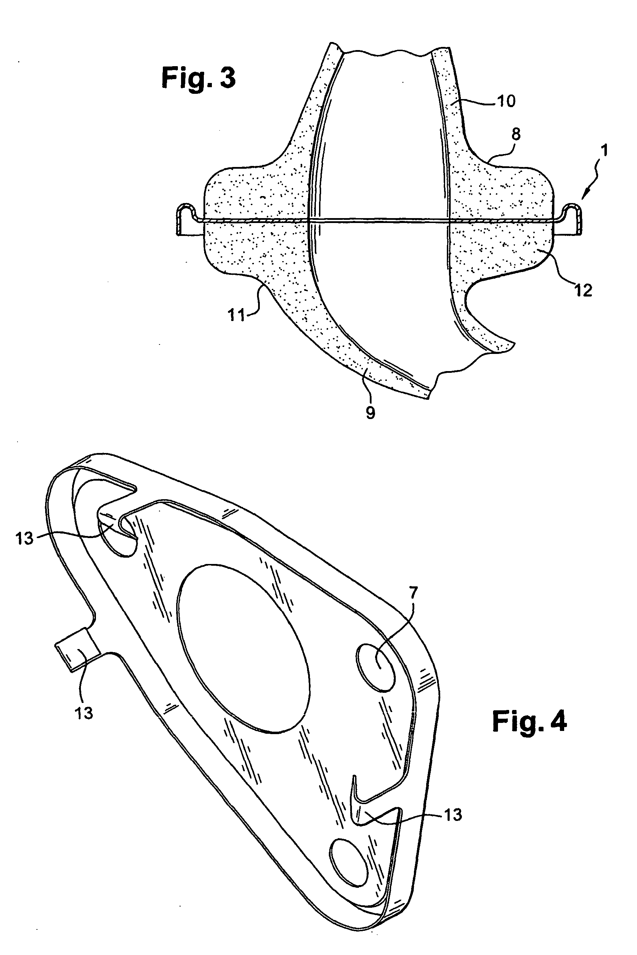

La figure 3 représente un joint selon l'invention monté dans un circuit d'échappement. Le circuit d'échappement comprend deux éléments 8 et 9 présentant des conduits 10 et 11. Les extrémités des conduits sont placées en vis-à-vis de sorte à assurer l'écoulement des gaz d'échappement entre eux. La surface de jointure est comprimée de façon connue en soi entre les extrémités des conduits. La lumière 3 du joint 1 met en communication les extrémités des conduits 10 et 11. Le déflecteur 4 entoure les extrémités des conduits pour dévier et diffuser un éventuel jet de gaz d'échappement. Le déflecteur fait ainsi saillie par rapport aux surfaces d'extrémité des conduits.

La figure 4 représente une variante d'un joint selon l'invention. Ce joint présente plusieurs crochets 13 flexibles radialement. Ces crochets sont solidaires du déflecteur 4. Ces crochets sont avantageusement utilisés pour maintenir le joint 1 en place sur un des éléments à étanchéifier durant l'assemblage. Au moins un des conduits présente ainsi un épaulement 12, conformé aux crochets pour assurer la fixation du joint.

## Revendications

1. Circuit d'échappement automobile, comprenant :
- deux éléments (8, 9) présentant des conduits respectifs (10, 11) dont les extrémités sont placées en vis-à-vis;
- un joint d'étanchéité (1) pour circuit d'échappement de véhicule automobile, comprenant une surface plane de jointure (2) formant une boucle fermée entourant une lumière (3), la surface de jointure étant comprimée entre lesdites extrémités des conduits, la lumière (3) dudit joint mettant en communication lesdits conduits, **caractérisé en ce que** ledit joint comprend en outre un déflecteur (4) entourant la surface de jointure (2) et faisant saillie de part et d'autre (5, 6) de la surface de jointure, le déflecteur entourant lesdites extrémités des conduits.

2. Circuit d'échappement automobile selon la revendication 1, **caractérisé en ce que** :
- la surface plane de jointure (2) présente une épaisseur minimum prédéterminée;
- le déflecteur (4) fait saillie, de part et d'autre de la surface de jointure, d'au moins deux fois ladite épaisseur minimum.

3. Circuit d'échappement automobile selon la revendication 1 ou 2, **caractérisé en ce que** le déflecteur fait saillie d'au moins deux millimètres de part et d'autre de la surface de jointure.

4. Circuit d'échappement automobile selon l'une quelconque des revendications 1 à 3, **caractérisé en ce que** la surface de jointure présente une épaisseur comprise entre 0,2 et 1,5 millimètres.

5. Circuit d'échappement automobile selon l'une quelconque des revendications précédentes, **caractérisé en ce que** le joint est constitué d'un alliage métallique.

6. Circuit d'échappement automobile selon l'une quelconque des revendications précédentes, **caractérisé en ce que** le déflecteur présente deux flancs (5, 6) formant une rigole.

7. Circuit d'échappement automobile selon la revendication 6, **caractérisé en ce que** la rigole formée présente une section en forme de U.

8. Circuit d'échappement automobile selon l'une quelconque des revendications précédentes, **caractérisé en ce que** le déflecteur présente en outre au moins deux crochets flexibles élastiquement (13) suivant une direction radiale.

9. Circuit d'échappement automobile selon la revendication 8, **caractérisé en ce que**:
- au moins un conduit présente un épaulement au niveau de l'extrémité en contact avec le joint;
- les crochets du joint sont fixés sur ledit épaulement.

## Claims

1. Motor vehicle exhaust circuit comprising:
- two elements (8, 9) having respective pipes (10, 11) the ends of which are positioned facing one another;
- a motor vehicle exhaust circuit gasket (1), comprising a flat jointing surface (2) forming a closed loop surrounding an aperture (3), the jointing surface being compressed between the said ends of the pipes, the aperture (3) of the said gasket placing the said pipes in communication with one another, **characterized in that** the said gasket further comprises a deflector (4) surrounding the jointing surface (2) and projecting on each side (5, 6) of the jointing surface, the deflector surrounding the said ends of the pipes.

2. Motor vehicle exhaust circuit according to Claim 1, **characterized in that**:
- the flat jointing surface (2) has a predetermined minimum thickness;
- the deflector (4) projects, on each side of the jointing surface, by at least twice the said minimum thickness.

3. Motor vehicle exhaust circuit according to Claim 1 or 2, **characterized in that** the deflector projects on each side of the jointing surface by at least two millimetres.

4. Motor vehicle exhaust circuit according to any one of Claims 1 to 3, **characterized in that** the jointing surface is of a thickness of between 0.2 and 1.5 millimetres.

5. Motor vehicle exhaust circuit according to any one of the preceding claims, **characterized in that** the gasket is made of a metal alloy.

6. Motor vehicle exhaust circuit according to any one of the preceding claims, **characterized in that** the deflector has two flanks (5, 6), thereby forming a channel section.

7. Motor vehicle exhaust circuit according to Claim 6, **characterized in that** the channel section formed has a U-shaped cross section.

8. Motor vehicle exhaust circuit according to any one of the preceding claims, **characterized in that** the deflector further has at least two hooks (13) that are elastically flexible in a radial direction.

9. Motor vehicle exhaust circuit according to Claim 8, **characterized in that**:
- at least one pipe has a shoulder in the region of the end in contact with the gasket;
- the hooks of the gasket are fixed onto the said shoulder.

## Patentansprüche

1. Kraftfahrzeug-Auspuffanlage, umfassend:
- zwei Elemente (8, 9), die jeweilige Leitungen (10, 11) aufweisen, deren Enden gegenüber angeordnet sind;
- einen Dichtungsring (1) für eine Kraftfahrzeug-Auspuffanlage, umfassend eine ebene Verbindungsfläche (2), die eine geschlossene Schleife bildet, die eine Öffnung (3) umgibt, wobei die Verbindungsfläche zwischen den Enden der Leitungen zusammengedrückt wird, wobei die Öffnung (3) der Dichtung eine Verbindung zwischen den Leitungen herstellt, **dadurch gekennzeichnet, dass** die Dichtung außerdem einen Ablenkring (4) umfasst, der die Verbindungsfläche (2) umgibt und auf beiden Seiten (5, 6) der Verbindungsfläche übersteht, wobei der Ablenkring die Leitungsenden umgibt.

2. Kraftfahrzeug-Auspuffanlage nach Anspruch 1, **dadurch gekennzeichnet, dass**:
- die ebene Verbindungsfläche (2) eine vorherbestimmte Mindestdicke aufweist;
- der Ablenkring (4) auf beiden Seiten der Verbindungsfläche mindestens um die doppelte Mindestdicke übersteht.

3. Kraftfahrzeug-Auspuffanlage nach Anspruch 1 oder 2, **dadurch gekennzeichnet, dass** der Ablenkring um mindestens zwei Millimeter auf beiden Seiten der Verbindungsfläche übersteht.

4. Kraftfahrzeug-Auspuffanlage nach einem der Ansprüche 1 bis 3, **dadurch gekennzeichnet, dass** die Verbindungsfläche eine Dicke zwischen 0,2 und 1,5 Millimetern aufweist.

5. Kraftfahrzeug-Auspuffanlage nach einem der vorhergehenden Ansprüche, **dadurch gekennzeichnet, dass** die Dichtung aus einer Metalllegierung besteht.

6. Kraftfahrzeug-Auspuffanlage nach einem der vorhergehenden Ansprüche, **dadurch gekennzeichnet, dass** der Ablenkring zwei Flanken (5, 6) aufweist, die eine Rinne bilden.

7. Kraftfahrzeug-Auspuffanlage nach Anspruch 6, **dadurch gekennzeichnet, dass** die gebildete Rinne einen U-förmigen Querschnitt aufweist.

8. Kraftfahrzeug-Auspuffanlage nach einem der vorhergehenden Ansprüche, **dadurch gekennzeichnet, dass** der Ablenkring außerdem mindestens zwei Haken (13) aufweist, die in einer Radialrichtung elastisch biegsam sind.

9. Kraftfahrzeug-Auspuffanlage nach Anspruch 8, **dadurch gekennzeichnet, dass**:
- mindestens eine Leitung einen Ansatz an dem Ende in Kontakt mit der Dichtung aufweist;
- die Haken der Dichtung an dem Ansatz befestigt sind.
